# FASCICULE DE BREVET EUROPEEN

(11) **EP 0 310 500 B1**
(45) Date de publication et mention de la délivrance du brevet: **13.04.1994**
(21) Numéro de dépôt: 88402447.2
(22) Date de dépôt: 28.09.1988
(51) Int. Cl.: F16D 3/20, C03B 25/08, C03B 29/04, C03B 35/16, F16C 32/06, F27B 9/24

(54) **Unité de palier pour les rouleaux porteurs d'un four horizontal et four horizontal pour feuilles de verre**
Lager für die Tragerollen eines horizontalen Durchlaufofens und horizontaler Durchlaufofen für Glasplatten
Bearing unit for the support rollers in a horizontal furnace, and hotizontal furnace for glass sheets

(30) Priorité: 01.10.1987 DE 3733201
(43) Date de publication de la demande: 05.04.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kuster, Hans-Werner, D-5100 Aachen (DE); Radermacher, Herbert, Raeren (BE); Vanaschen, Luc,, B-4700 Eupen (BE); Schubert, Gerhard, D-5120 Herzogenrath (DE)
(74) Mandataire: Leconte, Jean-Gérard

(56) Documents cités:
- EP-A- 0 019 136
- US-A- 3 155 438
- US-A- 3 189 389
- US-A- 3 463 563
- US-A- 3 703 322
- US-A- 4 139 244

## Description

La présente invention concerne un four horizontal, pour le réchauffage de feuilles de verre ou pour le traitement de feuilles échauffées à leur température de trempe et/ou de bombage, comportant une série de rouleaux porteurs entraînés de manière synchrone au moins par groupes. L'invention concerne également une unité de palier pour un rouleau porteur dans un four horizontal de ce type.

On connaît de nombreuses formes de réalisation de fours horizontaux de cet art qui se distinguent généralement les unes des autres par leurs dispositifs d'accouplement et d'entraînement des rouleaux et par leurs paliers de roulement. Des exemples de réalisations usuels sont décrits par exemple dans les publications de brevets EP 51 539, EP 70 244, DE 2 319 049, DE 2 605 303, US 4 230 475, US 4 399 598 et US 4 725 300.

Dans la zone chaude de tels fours horizontaux, les rouleaux porteurs ou cylindres formant le chemin de transport sont usuellement constitués de tubes ou barres en céramique cylindriques dont les sections d'extrémité sont amenées à travers les parois latérales du four à l'extérieur de celui-ci et tourillonnent dans des paliers placés hors du four. Un tourillonnement des rouleaux porteurs dans des paliers placés dans le four n'est pas possible à l'aide des moyens connus en raison des températures de plus de 600°C qui y règnent. Les rouleaux porteurs sont accouplés à l'extérieur du four d'une manière adéquate à un dispositif d'entraînement et sont entraînés de manière synchrone.

Diverses réalisations sont connues pour le tourillonnement des rouleaux porteurs à l'extérieur du four. Selon l'enseignement du brevet US 4 399 598, des coiffes métalliques sont pressées sur les deux extrémités des tubes en céramiques et portent chacune un bout d'axe. Ces bouts d'axes tourillonnent dans des roulements à billes usuels. Selon l'enseignement du brevet EP 51 539, les sections d'extrémité des rouleaux porteurs sont montées chacune à l'extérieur du four en libre rotation sur deux rouleaux d'acier disposés à une courte distance horizontale l'un de l'autre.

Du brevet US-A-3 703 322, il est connu une unité de palier constituée par un coussinet dont la surface de glissement est pourvue de lumières qui sont alimentées en air pour former une poche hydrostatique sur laquelle repose le rouleau. Le coussinet repose sur une bille elle-même posée sur une base plane de sorte que l'assiette du coussinet peut s'ajuster à toutes les positions du rouleau. Toutefois, un tel système rend difficile le positionnement initial du rouleau, la position en fonctionnement du coussinet ne correspondant pas à une position d'équilibre du coussinet isolé. Par ailleurs, il n'est pas possible de régler la hauteur du coussinet, notamment par rapport aux autres unités de palier des autres rouleaux du convoyeur en vue de régler l'horizontalité et la planéité du convoyeur. De plus, il n'est pas prévu de monter une telle unité de palier au sein même d'un four.

De plus, selon les brevets DE-2 319 049 et DE 2 605 303, les zones d'extrémité des rouleaux porteurs sises hors du four sont posées sur des bandes entraînées de manière synchrone, qui, pour leur part, glissent sur des surfaces de support planes. Dans le sens de déplacement des bandes, derrière les rouleaux porteurs, sont disposés des butées ou des rouleaux de butée contre lesquels les rouleaux porteurs roulent et qui assurent que ces rouleaux porteurs conservent leur position pendant leur mouvement de rotation. L'entraînement des rouleaux porteurs s'effectue par la friction statique, créée sous l'effet du poids des rouleaux, entre les bandes en déplacement et les rouleaux porteurs posés sur ces bandes.

Pour préserver des propriétés optiques des feuilles de verre, les lignes de support des rouleaux doivent présenter le plus petit écartement possible dans la zone du four où les feuilles de verre atteignent ou dépassent leur température de ramollissement. Cela signifie que les rouleaux porteurs doivent avoir le plus petit diamètre possible ; dans la pratique on utilise des rouleaux porteurs d'un diamètre de 4 à 5 cm, peu espacés les uns des autres.

A mesure que la largeur du four augmente, ce qui est nécessaire pour le réchauffage ou le traitement de feuilles de verre de plus grandes dimensions, il devient plus difficile de conserver la haute qualité optique souhaitée pour des vitrages. Ceci résulte du fait qu'à mesure que leur longueur augmente avec un diamètre inchangé les rouleaux porteurs subissent une flexion élastique croissante due à leur propre poids et, le cas échéant, des déformations permanentes. En conséquence, les génératrices supérieures des rouleaux porteurs ne se trouvent plus de manière optimale dans un seul et même plan et ce support plus ou moins inégal des feuilles de verre aboutit à la dégradation observée de la planéité des vitrages et ainsi à une altération de leurs propriétés optiques.

Est certes connue du brevet DE 615 421 une étenderie dans laquelle les paliers de roulement sont disposés au sein du four, mais dans ce type de four règne une température sensiblement plus basse que dans un four de bombage-trempe. Avec les moyens connus, il n'est pas possible de remédier aux inconvénients précités en plaçant les paliers des rouleaux porteurs dans l'enceinte de chauffage.

L'invention a pour but de procurer une unité de palier pour les rouleaux porteurs qui, d'une part, présente de meilleures propriétés de rotation que les paliers connus et qui, d'autre part, puisse être utilisé à des températures nettement plus élevées que ceux-ci. Plus précisément l'invention a pour but de procurer un palier résistant à la chaleur qui puisse être monté à l'intérieur du four lui-même, de telle sorte que la longueur libre des rouleaux porteurs entre les deux paliers, pour une largeur de travail inchangée du four, soit ainsi réduite, qu'une meilleure précision du plan de support soit obtenue et que, de cette façon, le risque d'une altération des propriétés optiques des feuilles de verre soit réduit.

L'invention a également pour but l'application d'une telle unité de palier dans un four horizontal pour le réchauffage de feuilles de verre dont les paliers de roulement sont montés à l'intérieur du four et dont l'accouplement des rouleaux porteurs au dispositif d'entraînement s'effectue non seulement de manière à permettre un entraînement adéquat des rouleaux mais aussi de manière à réduire les pertes de chaleur au niveau de l'accouplement.

Comme il ressort du préambule de la revendication 1, rédigé sur la base du document US-A-3 703 322, l'invention a pour objet un développement d'une unité de palier constituée d'un coussinet qui s'adapte automatiquement à l'orientation de la section de rouleau et dont la surface de glissement est pourvue de lumières qui, en vue de former un film de gaz dans l'interstice de tourillonnement entre le coussinet et la section de rouleau sont alimentées au moyen d'un gaz sous pression, en particulier de l'air.

Ce développement consiste en ce que le coussinet prend appui sur deux goujons présentant chacun une surface d'appui en substance ponctuelle, un goujon étant monté fixe et oscillant et l'autre goujon étant monté sur une base plane de manière à pouvoir pivoter avec glissement autour du goujon fixe.

L'invention procure une unité de palier dans laquelle, grâce au support à gaz du rouleau, aucun contact mécanique des surfaces en mouvement l'une par rapport à l'autre ne s'établit. En conséquence, aucun contact mécanique ne se produit à l'intérieur du palier. L'interstice constant nécessaire pour former un film de gaz uniforme entre la surface du rouleau et la surface du coussinet est garanti par le support du coussinet qui est souple et s'adapte automatiquement au rouleau. Le support du coussinet en deux points seulement, disposés sur une ligne droite perpendiculaire à l'axe du rouleau, permet d'une part un mouvement d'oscillation du coussinet autour de la ligne reliant ces points d'appui et, d'autre part, un mouvement de pivotement horizontal autour du point d'appui fixe. Le coussinet s'ajuste de cette façon lui-même d'une manière optimale.

Cet auto-ajustement du palier rend possible l'installation des paliers à l'intérieur du four. En effet, lors de la mise en chauffe d'un four, il se produit inévitablement des dilatations thermiques des matériaux qui impliquent un ajustement des paliers, or il est bien évident qu'on ne peut pas opérer un ajustement manuel à l'intérieur du four chaud.

De plus, des unités de paliers de roulement conformes à l'invention permettent de raccourcir considérablement la longueur libre des rouleaux entre les deux points de support, et ceci pour une même largeur utile de four. De ce fait, le risque de flexion des rouleaux porteurs est considérablement amoindri. Ainsi, il est même possible d'utiliser des rouleaux porteurs de plus petit diamètre - et donc en plus grand nombre - de façon à accroître le nombre de points de support des feuilles de verre ce qui réduit le risque d'une déformation de celles-ci. Si on choisit un arrangement très serré des rouleaux porteurs, on peut au besoin placer les coussinets en quinconce, c'est-à-dire disposés alternativement dans deux rangées voisines.

L'invention propose également un four pour le réchauffage de feuilles de verre caractérisé en ce qu'au moins dans une partie du four les supports des rouleaux sont disposés à l'intérieur du four et sont constitués par des unités de palier à gaz dont les surfaces de glissement sont pourvues de lumières alimentées en gaz sous pression, en particulier en air, en vue de former un film de gaz dans l'interstice de tourillonnement entre le coussinet et la section du rouleau. Les rouleaux sont de préférence d'une longueur inférieure à la largeur du four et montés entièrement à l'intérieur de celui-ci. Selon une autre caractéristique avantageuse de l'invention, l'accouplement de chaque rouleau à un arbre d'entraînement disposé à l'extérieur du four est obtenu au moyen d'une tige d'accouplement traversant la paroi du four qui présente un diamètre plus petit que celui du rouleau et qui est accouplée de façon articulée à la fois à l'arbre d'entraînement et au rouleau de support.

Un four horizontal présentant la combinaison de ces caractéristiques répond de façon optimale aux exigences requises pour une grande qualité optique des feuilles de verre et permet de plus, des productions industrielles en masse. Les coûts sont sensiblement réduits du fait du raccourcissement des rouleaux réalisés en règle générale dans une matière première d'un prix élevé. De plus, on réduit au minimum les ouvertures pratiquées dans la paroi du four pour l'entraînement des rouleaux ; ainsi les pertes de chaleur sont moindres et il est possible d'obtenir un profil homogène de températures dans le four.

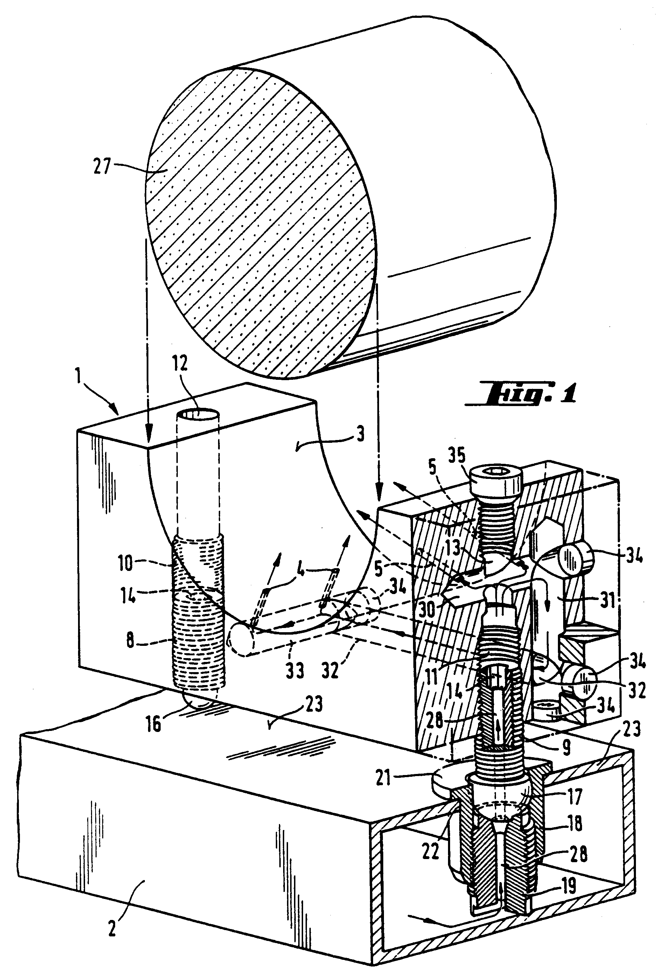

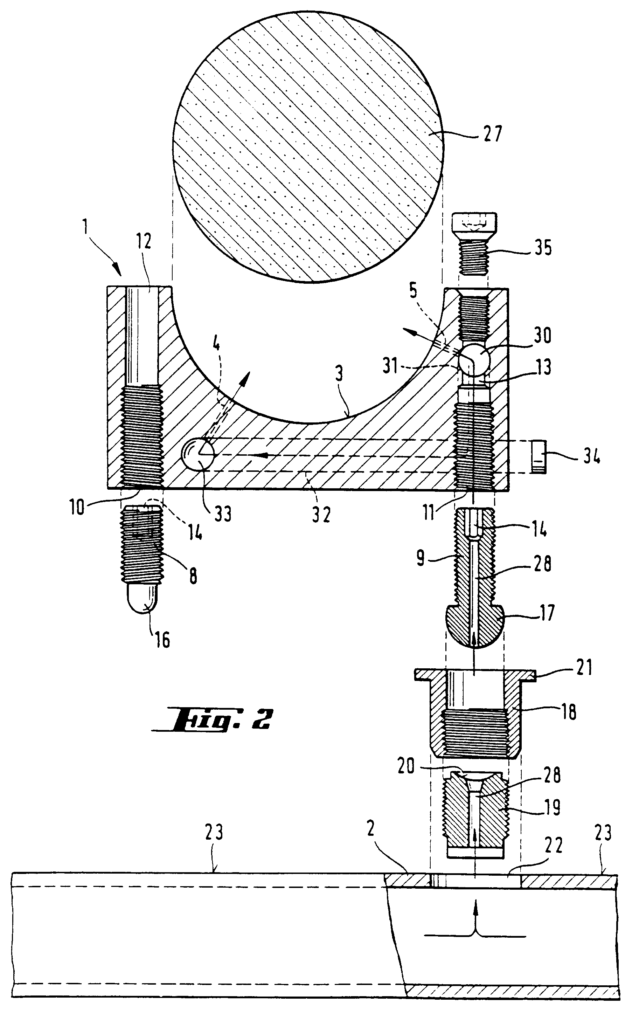

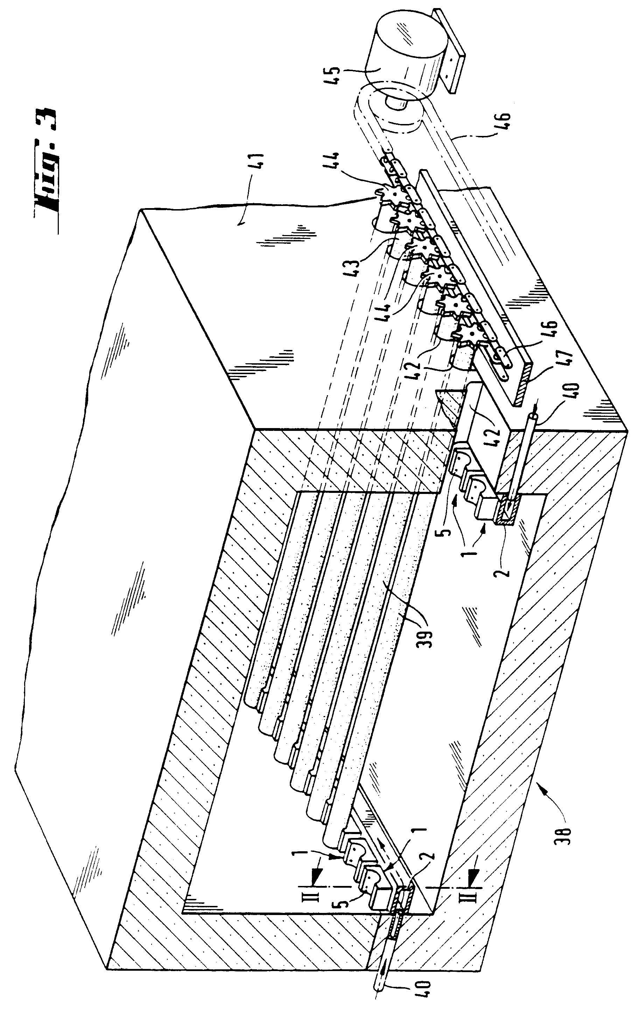

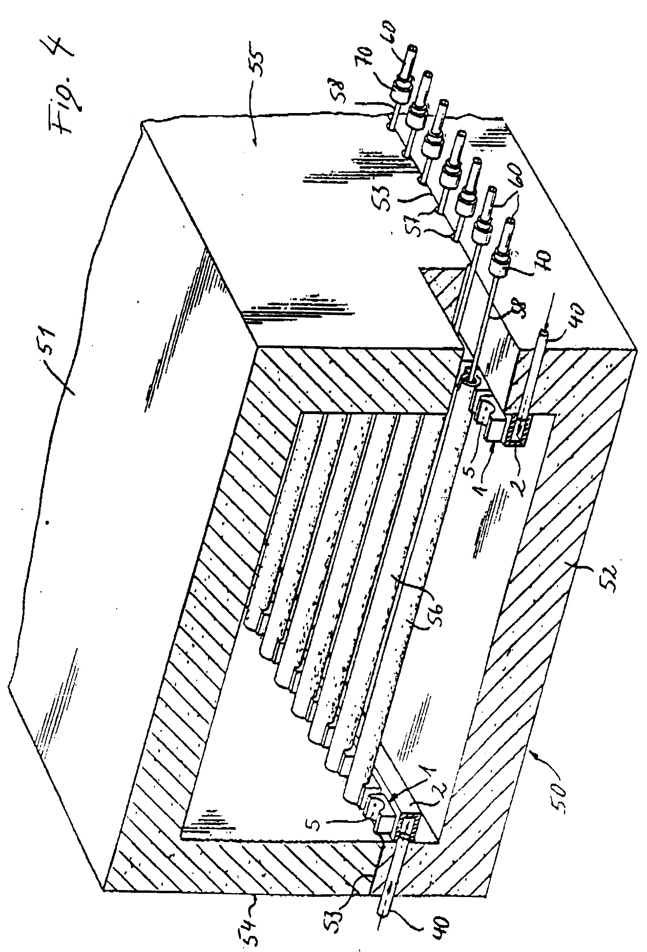

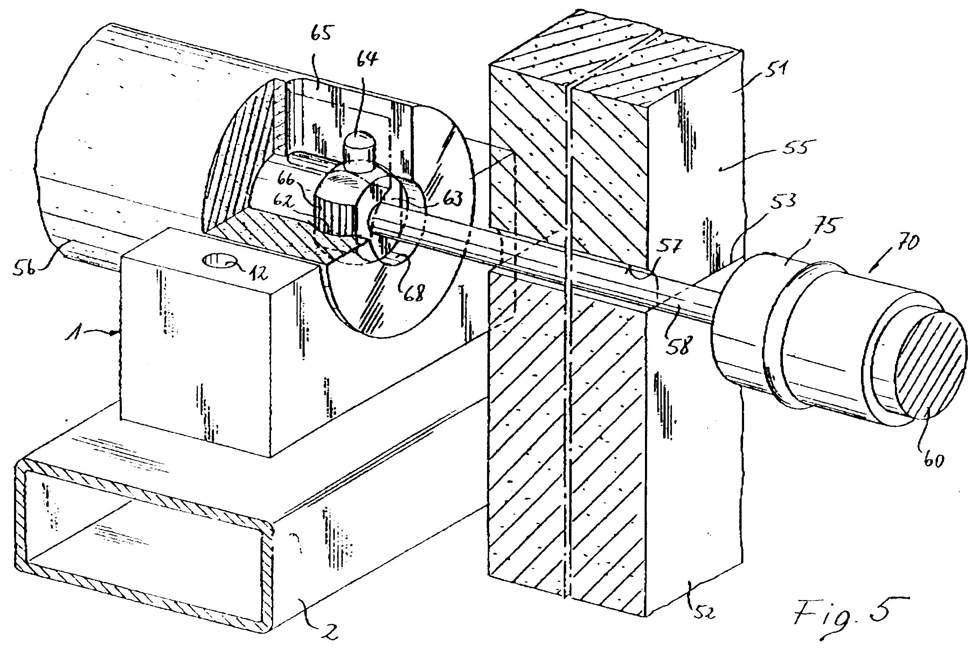

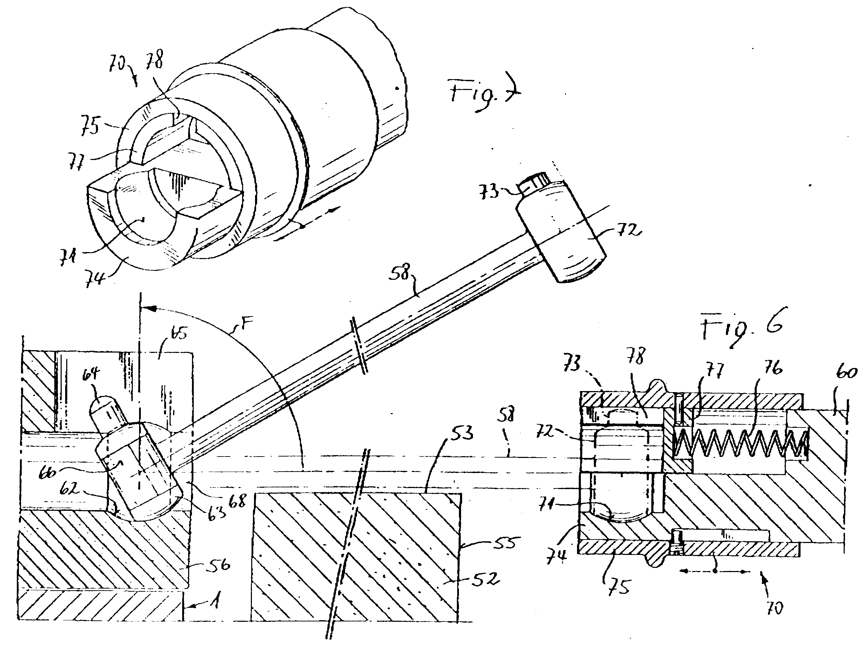

D'autres détails et caractéristiques avantageuses de l'invention sont décrits ci-après en référence aux figures annexées qui représentent :
. **figure 1** : une vue d'ensemble en perspective en partie éclatée, d'une unité de palier pour un rouleau porteur ;
. **figure 2** : une vue en coupe éclatée de l'unité de palier représentée sur la fig. 1 ;
. **figure 3** : une vue fragmentaire en perspective d'un four continu pour feuilles de verre comportant des rouleaux porteurs montés en rotation conformément à l'invention ;
. **figure 4** : une vue en perspective d'un four continu pour feuilles de verre avec le dispositif d'accouplement selon l'invention ;
. **figure 5** : une vue en perspective du dispositif d'accouplement ;
. **figure 6** : le dispositif de la figure 5 au moment du désaccouplement ;
. **figure 7** : un détail de la pièce d'accouplement des figures 5 et 6.

Comme les figures 1 et 2 le montrent en détail, une unité de palier comporte un coussinet 1 supporté de manière souple, qui prend appui sur un tube rectangulaire 2 servant en même temps à assurer l'alimentation en air comprimé.

Le coussinet 1 est en métal réfractaire ou en une autre matière réfractaire, par exemple de la céramique. Il a la forme d'une coquille, c'est-à-dire que la surface de glissement 3 supportant le rouleau porteur 27 a la forme d'un demi-cylindre à surface de base semi-circulaire. Dans cette surface de glissement 3 s'ouvrent des lumières 4, 5 par lesquelles l'air comprimé parvient dans l'interstice de tourillonnement.

Le support du coussinet 1 est assuré par les deux goujons 8, 9 qui sont vissés dans des trous taraudés 10, 11 prolongés par des trous taraudés 12, 13. Les trous taraudés 10, 11 sont ménagés dans le plan vertical médian du coussinet, les trous 12, 13 quant à eux, traversant le reste du corps du coussinet. Les goujons 8, 9 présentent chacun, dans leur face supérieure, un creux intérieurement hexagonal 14. La profondeur de vissage des goujons 8, 9 dans les trous taraudés 10, 11 peut dès lors être modifiée au moyen de clés hexagonales par le haut, à travers les trous 12, 13 afin d'effectuer le réglage en hauteur du coussinet.

Le goujon 8 est pourvu, à son extrémité inférieure, d'une tête sphérique 16 et le goujon 9 d'une tête sphérique 17. La tête sphérique 17, qui représente la surface d'appui de l'élément de support fixe, à savoir le goujon 9, repose dans une calotte sphérique correspondante qui est formée par la douille cylindrique taraudée 18 et par le cylindre 19 vissé dans cette douille 18. Le cylindre 19 présente, à son extrémité supérieure, une surface de portée 20 ayant la forme d'un segment sphérique creux qui coopère avec la surface d'appui de la tête sphérique 17. Latéralement, la tête sphérique 17 est guidée par la paroi interne de la douille 18. Le goujon 9, qui forme le support fixe du coussinet, peut ainsi effectuer, dans la cuvette sphérique 18, 19, 20, des mouvements d'oscillation angulaire autour de la tête sphérique 17 dans toutes les directions. La douille 18 est pourvue, à son extrémité supérieure, d'un épaulement 21. La douille 18, avec le cylindre vissé 19, est insérée dans l'ouverture 22 ménagée dans la paroi supérieure 23 du tube rectangulaire 2, l'épaulement 21 prenant appui sur la paroi 23.

Le goujon 8, avec la tête sphérique 16 forme le support du coussinet pouvant pivoter avec glissement. La tête sphérique 16 prend appui sur la surface plane de la paroi 23 du tube rectangulaire 2.

L'admission du gaz, par exemple de l'air de support dans l'interstice de tourillonnement formé par la surface 3 et la surface de la section de rouleau 27 tournant dans le coussinet, est assurée par le tube rectangulaire 2 à travers le goujon fixe 9. Le cylindre 19 et le goujon 9 sont pourvu chacun, à cet effet, d'une forure axiale 28.

A l'intérieur du coussinet est prévu un trou 13 perpendiculaire à la forme 30 et la croisant, avec lequel communiquent les deux lumières 5 débouchant dans la surface de palier 3. Egalement en communication avec la forme transversale 30 est prévue une forme 31 qui s'étend parallèlement au trou 13 et qui, pour sa part, est en communication avec une forure longitudinale 32. La forure longitudinale 32 s'ouvre dans une forure transversale 33 avec laquelle communiquent les deux lumières 4 débouchant dans la surface de palier 3. Les forures 30, 31, 32 et 33 ont chacune la forme de trous borgnes et sont fermées par des bouchons 34 adéquats. Le trou 13 est fermé à sa partie supérieure par un bouchon vissé 35 qui peut être enlevé lorsqu'un ajustement en hauteur du goujon 9 doit être effectué. Ce système de forures permet l'alimentation en air comprimé de l'interstice de tourillonnement.

La figure 3 montre un four horizontal 38 pour feuilles de verre et illustre comment la longueur libre des rouleaux porteurs 39 peut être diminuée, de telle sorte que les unités de paliers décrites soient disposées à l'intérieur du four en tant que paliers résistant à la chaleur. A cet effet, le long des parois latérales du four sont disposés les tubes rectangulaires 2 en acier réfractaire. Les tubes rectangulaires 2 sont chacun alimentés en air comprimé par une conduite d'alimentation 40. Sur les tubes rectangulaires 2, les coussinets 1 sont disposés de la manière décrite plus haut. Les rouleaux porteurs 39 sont amenés à l'extérieur du four, d'un côté de celui-ci, par des ouvertures correspondantes 42 prévues dans la paroi latérale 41. Sur la zone d'extrémité 43 de chacun des rouleaux porteurs 39, qui sont par exemple constitués d'un cylindre ou d'un tube en céramique, est fixée une roue dentée 44. Les roues dentées 44 sont mues en rotation par une chaîne 46 entraînée par le moteur 45. La chaîne 46 est maintenue en position par la base plane 47 sur laquelle elle glisse.

En règle générale, il suffit que l'air comprimé admis dans les tubes 2 soit à température ambiante. On peut également de cette façon refroidir plus ou moins fortement les unités de paliers et les sections des rouleaux porteurs 39 montées sur les paliers. Cependant, lorsqu'on attache de l'importance à une courbe de température particulièrement homogène à l'intérieur du four, on peut préchauffer l'air comprimé admis dans les tubes 2 à une température souhaitée.

La figure 4 est une vue fragmentaire d'un four horizontal 50 comportant un dispositif d'accouplement conforme à un mode de réalisation de l'invention. Le four traversant 50 est constitué d'une partie supérieure 51 et d'une partie inférieure 52. La partie supérieure 51 peut être soulevée, le long du plan de séparation 53. Lorsque le four est fermé, la paroi latérale 54 ne présente pas d'ouverture, tandis que la paroi opposée 55 présente à distance des rouleaux support 56 et à hauteur du plan 53 des jours 57 par lesquels les tiges d'accouplement 58 traversent la paroi 55.

A l'intérieur du four sont disposés des paliers 1 du type paliers à gaz fonctionnant à haute température. Les paliers 1 en forme de coquilles prennent appui sur un tube rectangulaire 2 disposé selon la longueur du four parallèlement aux parois latérales 54, 55. Le tube rectangulaire 2 sert à l'alimentation en air comprimé des paliers 1. Pour cela, il reçoit l'air comprimé par la conduite d'alimentation 40. L'air comprimé s'échappe par des lumières 5 pratiquées dans la surface de glissement du palier 1 de manière à former un film de gaz.

Les rouleaux support 56 sont réalisés dans un matériau résistant à la chaleur, par exemple en un matériau céramique et peuvent être pleins ou creux.

Comme illustré en détails aux figures 5 à 7, les tiges d'accouplement 58 sont reliées de façon articulée d'un côté aux rouleaux 56 et de l'autre côté, à l'extérieur du four à l'arbre d'entraînement 60. Dans ce but, le rouleau 56 présente à une de ses extrémités un creux en forme de cuvette sphérique 62 dans laquelle est posé un segment sphérique 63 fixé à la tige d'accouplement 58. Le segment sphérique 63 est pourvu d'une broche d'entraînement 64 orientée perpendiculairement à l'axe de la tige 58 et engrenée dans la fente 65, orientée selon une radiale du rouleau.

Le segment sphérique 63 comporte deux segments cylindriques 66 disposés de façon symétrique de sorte que les génératrices de ces segments 66 sont parallèles à l'axe de la broche 64. Le rayon du cylindre formant les segments 66 correspond au rayon de la forure 68 orientée selon l'axe du rouleau 56 ou est éventuellement légèrement plus petit que celui-ci.

Pour desserrer la tige 58 du rouleau 56, la tige 58 doit subir une rotation de 90° suivant la direction de la flèche F (figure 5) dans le plan formé par l'axe de la tige d'accouplement 58 et par la broche 64. Dans cette position, les génératrices des segments cylindriques 66 sont parallèles à l'axe du rouleau 56 et le segment sphérique 63 peut être retiré par la forure 68.

Pour fixer, ou retirer la tige 58 sur le rouleau 56, on doit auparavant soulever la partie supérieure 51 du four et détacher de l'arbre d'entraînement l'autre extrémité de la tige 58.

La liaison de la tige 58 avec l'arbre d'entraînement 60 est obtenue grâce à la pièce d'accouplement 70 à l'extrémité de l'arbre d'entraînement 60. La pièce d'accouplement 70 comporte un creux 71 en forme de cuvette sphérique dans lequel est posé le segment cylindrique 72 disposé à l'extrémité d'entraînement de la tige d'accouplement 58 et est muni d'une broche d'entraînement 73. Comme il ressort notamment de la figure 6, la cuvette sphérique 71 se trouve dans le demi-cylindre 74, à l'extrémité de la pièce d'accouplement 70 de façon à ce que l'on puisse par basculement retirer la tige 58 de la pièce d'accouplement 70 lorsque le segment cylindrique 2 est dans la position ici représentée. A l'extrémité de l'arbre 60 est montée de façon mobile une glissière 75 sous forme d'un creux. Sous l'action du ressort 76, la glissière 75 est repoussée dans sa position extrême représentée à la figure 6, position dans laquelle le segment cylindrique 72 est fixé dans la cuvette 71. Le fourreau 77 fixé sur la glissière 75 comporte une fente 78 dans laquelle engrène la broche 73 de la tige d'accouplement 58.

Le palier 1 du roulement 56, en appui sur le tube 2 est identique à celui décrit en référence à la figure 1.

Un tel four horizontal est plus particulièrement destiné au réchauffage de feuilles de verre en vue de leur formage et/ou de la trempe, notamment pour la fabrication de vitrages automobiles.

## Revendications

1. Unité de palier constituée d'un coussinet (1) qui s'adapte automatiquement à l'orientation de la section de rouleau (27) et dont la surface de glissement (3) est pourvue de lumières (4, 5) qui, en vue de former un film de gaz dans l'interstice de tourillonnement entre le coussinet (1) et la section de rouleau (27), sont alimentées au moyen d'un gaz sous pression, en particulier de l'air, **caractérisée en ce que** le coussinet prend appui sur deux goujons (8, 9) présentant chacun une surface d'appui en substance ponctuelle, le goujon (9) étant monté fixe et oscillant et le goujon (8) étant monté sur une base plane de manière à pouvoir pivoter avec glissement autour du goujon (9) fixe.

2. Unité de palier suivant la revendication 1, **caractérisée en ce que** les surfaces d'appui en substance ponctuelles des goujons (8, 9) ont chacune la forme d'une tête sphérique (16, 17).

3. Unité de palier suivant la revendication 2, **caractérisée en ce que** la tête sphérique (17) du goujon fixe (9) est montée en rotation dans une cuvette sphérique (20).

4. Unité de palier suivant l'une quelconque des revendications 1 à 3, **caractérisée en ce que** l'admission d'air aux lumières (4, 5) du coussinet (1) s'effectue par une forure axiale (28) dans le support fixe (goujon 9), la partie de palier (cylindre 19) formant la cuvette sphérique (20) étant également pourvue d'une forure axiale (28) qui est en communication avec un tube (2) amenant l'air.

5. Unité de palier suivant l'une quelconque des revendications 1 à 4, **caractérisée en ce que** les goujons (8, 9) du coussinet (1) sont montés sur un tube rectangulaire (2) amenant l'air comprimé, dont la paroi supérieure plane (23) forme directement la surface de montage pour le support (goujon 8) pouvant pivoter avec glissement, et dans lequel est installé l'appui (18, 19, 20, 21) portant le support fixe (goujon 9).

6. Unité de palier suivant l'une quelconque des revendcations 1 à 5, **caractérisée en ce que** les supports présentant les surfaces d'appui ponctuelles ou en forme de têtes sphériques sont constitués de goujons (8, 9) dont la profondeur de vissage dans le coussinet (1) est réglable.

7. Unité de palier suivant la revendication 6, **caractérisée en ce que** le coussinet (1) est pourvu, dans le prolongement de trous taraudés (10, 11) recevant les goujons (8, 9), des trous de traversée (12, 13) à travers lesquels la profondeur de vissage des goujons (8, 9) est réglable.

8. Application d'une unité de palier selon l'une des revendications 1 à 7 dans un four horizontal pour le réchauffage de feuilles de verre en vue de leur bombage et/ou de leur trempe, les unités de palier étant montées à l'intérieur de la chambre du four.

9. Application selon la revendication 8 à la réalisation d'un four dont les rouleaux portés par les unités de palier sont d'une longueur inférieur à la largeur du four.

## Claims

1. Bearing unit, composed of a plummer block (1) which automatically adapts to the orientation of the roller section (27) and the slide surface (3) of which is provided with apertures (4, 5) which, for the purpose of forming a gas film in the journalling gap between the plummer block (1) and the roller section (27), are supplied with a pressurized gas, especially air, characterized in that the plummer block rests on two pins (8, 9), each having a substantially punctiform bearing surface, the pin (9) being mounted fixed and oscillating and the pin (8) being mounted on a plane base in such a manner that it can pivot with sliding about the fixed pin (9).

2. Bearing unit according to Claim 1, characterized in that the substantially punctiform bearing surfaces of the pins (8, 9) each have the shape of a spherical head (16, 17).

3. Bearing unit according to Claim 2, characterized in that the spherical head (17) of the fixed pin (9) is rotatably mounted in a spherical cup (20).

4. Bearing unit according to any one of Claims 1 to 3, characterized in that the admission of air to the apertures (4, 5) of the plummer block (1) takes place through an axial bore (28) in the fixed support (pin 9), the bearing portion (cylinder 19) forming the spherical cup (20) being also provided with an axial bore (28), which is in communication with a tube (2) supplying the air.

5. Bearing unit according to any one of Claims 1 to 4, characterized in that the pins (8, 9) of the plummer block (1) are mounted on a rectangular tube (2) supplying the compressed air, of which the plane upper wall (23) directly forms the mounting surface for the support (pin 8) capable of pivoting with sliding, and in which is installed the seating assembly (18, 19, 20, 21) carrying the fixed support (pin 9).

6. Bearing unit according to any one of Claims 1 to 5, characterized in that the supports having punctiform or spherical head-shaped bearing surfaces are constituted of pins (8, 9), the depth of screwing of which into the plummer block (1) is adjustable.

7. Bearing unit according to Claim 6, characterized in that the plummer block (1) is provided, in the continuation of the threaded holes (10, 11) receiving the pins (8, 9), with through holes (12, 13), through which the screwing depth of the pins (8, 9) can be adjusted.

8. Application of a bearing unit according to one of Claims 1 to 7 in a horizontal furnace for the reheating of glass sheets for the purpose of bending and/or toughening them, the bearing units being mounted inside the chamber of the furnace.

9. Application according to Claim 8 to the construction of a furnace, in which the rollers carried by the bearing units are of a length less than the width of the furnace.

## Patentansprüche

1. Lagereinheit aus einer sich an die Ausrichtung des Wellenabschnitts (27) automatisch anpassenden Lagerschale (1), deren Gleitfläche (3) mit Öffnungen (4,5) versehen ist, die zur Bildung eines Gasfilms im Lagerspalt zwischen der Lagerschale (1) und dem Wellenabschnitt (27) mit unter Überdruck stehendem Gas, insbesondere mit Luft, beaufschlagt werden, **dadurch gekennzeichnet,** daß die Lagerschale auf zwei jeweils eine im wesentlichen punktförmige Stützfläche aufweisenden Bolzen (8,9) ruht, wobei der Bolzen (9) ortsfest und schwenkbar, und der Bolzen (8) auf einer ebenen Unterlage schwenkbar und um den ortsfesten Bolzen (9) herum gleitend gelagert ist.

2. Lagereinheit nach Anspruch 1, dadurch gekennzeichnet, daß die im wesentlichen punktförmigen Stützflächen der Bolzen (8,9) jeweils die Form eines Kugelkopfes (16,17) haben.

3. Lagereinheit nach Anspruch 2, dadurch gekennzeichnet, daß der Kugelkopf (17) des ortsfesten Bolzen (9) drehbar in einer Kugelpfanne (20) gelagert ist.

4. Lagereinheit nach einem der Ansprüche 1 bis 3, dadurch gekennzeichnet, daß die Luftzufuhr zu den Öfffnungen (4,5) in der Lagerschale (1) durch eine axiale Bohrung (28) in der ortsfesten Stütze (Bolzen 9) erfolgt, wobei das die Kugelpfanne (20) bildende Lagerteil (Zylinder 19) ebenfalls mit einer axialen Bohrung (28) versehen ist, die mit einem Luftzuführungsrohr (2) in Verbindung steht.

5. Lagereinheit nach einem der Ansprüche 1 bis 4, dadurch gekennzeichnet, daß die Bolzen (8,9) der Lagerschale (1) auf einem die Druckluft liefernden Vierkantrohr (2) gelagert sind, dessen obere ebene Wand (23) unmittelbar die Lagerfläche für die gleitend schwenkbare Stütze (Bolzen 8) bildet, und in dem das die ortsfeste Stütze (Bolzen 9) tragende Lager (18,19,20,21) angeordnet ist.

6. Lagereinheit nach einem der Ansprüche 1 bis 5, dadurch gekennzeichnet, daß die die punktförmigen oder kugelförmigen Stützflächen aufweisenden Stützen von Schraubenbolzen (8,9) gebildet werden, deren Einschraubtiefe in der Lagerschale (1) verstellbar ist.

7. Lagereinheit nach Anspruch 6, dadurch gekennzeichnet, daß die Lagerschale (1) in Verlängerung der die Gewindebolzen (8,9) aufnehmenden Gewindebohrungen (10,11) mit durchgehenden Bohrungen (12,13) versehen ist, durch die hindurch die Einschraubtiefe der Bolzen (8,9) verstellbar ist.

8. Verwendung einer Lagereinheit nach einem der Ansprüche 1 bis 7 in einem Horizontalofen für die Erwärmung von Glasscheiben zum Zweck des Biegens und/oder Vorspannens, wobei die Lagereinheiten im Innern der Ofenkammer angeordnet sind.

9. Verwendung nach Anspruch 8 bei einem Ofen, deren von den Lagereinheiten getragene Transportwellen eine Länge aufweisen, die kleiner ist als die Breite des Ofens.
